# EUROPEAN PATENT SPECIFICATION

(11) **EP 0 804 390 B1**
(45) Date of publication and mention of the grant of the patent: **16.09.1998**
(21) Application number: 96900350.8
(22) Date of filing: 15.01.1996
(51) Int. Cl.: C03C 8/24, C03C 8/16

(54) **SEALING GLASS PASTE**
VERSIEGELUNGSGLASPASTE
PATE DE VERRE DE SCELLEMENT

(30) Priority: 16.01.1995 GB 9500798
(43) Date of publication of application: 05.11.1997
(73) Proprietor: COOKSON GROUP plc, London EC2V 1PQ (GB)
(72) Inventor: BREWER, Jason, Robert, Banbury Oxford OX16 7UR (GB); SAVILL, Karen, Linburn Erskine Renfrewshire PA8 6HN (GB); WAGLAND, Alison, Mary, Cumnor Hill Oxford OX2 9HZ (GB)
(74) Representative: Allard, Susan Joyce
(86) International application number: GB9600068
(87) International publication number: WO9622255

(56) References cited:
- FR-A- 2 321 454
- GB-A- 2 118 928
- PATENT ABSTRACTS OF JAPAN vol. 008 no. 272 (E-284) ,13 December 1984 & JP,A,59 141141 (MATSUSHITA DENKO KK) 13 August 1984,
- DATABASE WPI Section Ch, Week 9122 Derwent Publications Ltd., London, GB; Class A97, AN 91-162184 & SU,A,1 578 093 ( KHARLAMOVA L P) , 15 July 1990
- DATABASE WPI Section Ch, Week 8248 Derwent Publications Ltd., London, GB; Class A81, AN 82-03062J & JP,A,57 170 838 ( MATSUSHITA ELEC WORKS) , 21 October 1982

## Description

The present invention relates to a sealing glass paste and, in particular, to a sealing glass paste for sealing the glass face plate to the glass funnel of a cathode ray tube (CRT). The sealing glass paste is applied to the edges of one part (either the face plate or the funnel) in the form of a ribbon. The remaining part is then placed in contact with the paste and the assembly is heated to evaporate the solvent, burn out the binder and fuse the sealing glass.

Wet coating techniques for sealing glass or ceramic parts have been proposed and generally have involved pastes having a sealing glass distributed throughout a binder/solvent system in which the solvent is an organic solvent. When the assembly has been formed it is then heated to evaporate the solvent, burn out the binder and fuse the glass. For example, US-A-4014845 discloses a binder/solvent system which comprises a polymeric material which is a polymer containing oxygen and a monomer of an alkyl methacrylate and a solvent for the polymeric material.

For sealing glasses which contain PbO and which melt and flow at low temperatures, preferably at below 475°C, such as PbO-B₂O₃-ZnO, the binder/solvent system which has been used commercially comprises nitrocellulose/amyl acetate or similar esters. Nitrocellulose has many disadvantages for use in such systems, but it has been tolerated because it does not cause the dielectric breakdown of the sealing glasses caused by reduction of PbO to Pb.

US-A-4099979 discloses that the use of, for example, Pb₃O₄ in the sealing glasses containing PbO and the pastes made therewith, prevents the reduction of PbO to Pb. The specification discloses that small amounts of a hydroxypropyl cellulose binder can be added to the nitrocellulose/amyl acetate binder/solvent system. This system still, however, involves the use of organic solvents.

WO-A-9500583 discloses a dry coating technique designed to overcome some of the difficulties inherent in applying a sealant to substrates via a binder/solvent system. This technique relies on using an unsaturated polyester prepolymer which is subsequently postcured via a free radical crosslinking step. This dry coating technique is generally useful for bonding metals, ceramics and plastics. However it cannot be used for TV glass sealing pastes because the polymer, by virtue of its chemical nature, would leave too much carbonaceous residue after burn out.

JP-A-59141141 discloses a sealing glass paste comprising 0.5 to 2% methyl cellulose mixed with a glass frit. The paste is used for sealing components of fluorescent lamps.

FR-A-2321454 discloses a sealing glass paste in which methyl cellulose, polyethylene glycols or ammonium alginates are included as plasticizers.

GB-A-2118928 discloses a vitreous enamelling process in which a composition comprising glass and/or metal particles is coated onto a metal or glass substrate. The composition includes an alkyl cellulose such as methyl cellulose, ethyl cellulose or isopropyl cellulose as a suspending agent.

SU-A-1578093 discloses a glazing slip for use in cementing ceramic condensor details, the slip contains methyl cellulose which is incorporated therein in order to reduce the spreadability of the mixture.

JP-A-57170838 discloses an aqueous composition for use as a coating paint for coating glass objects. The paint incorporates an ethoxylated methyl cellulose therein in order to improve the consistency of the paint.

We have now developed a sealing glass paste which overcomes the problems of the prior art and which comprises an aqueous binder system thus overcoming, in particular, the problems which are encountered with volatile organic solvent systems.

Accordingly, the present invention provides a sealing glass paste which comprises at least one sealing glass frit powder and an aqueous binder which comprises an aqueous solution of hydroxypropylmethyl cellulose, or a mixture of hydroxypropylmethyl cellulose with methyl cellulose or hydroxypropyl cellulose, the aqueous binder burning out at a temperature of below 475°C to leave less than 2% by weight of residues based on the total weight of the solids content of the binder.

Wetting agents may also be incorporated into the vehicle in an amount of up to about 5% by weight in order to improve the wetting of the frit glass powder after mixing. Suitable wetting agents include poly(ethylene glycol) alkyl ethers and silicone additives.

Dispersants may also be added to the vehicle formulation in order to improve the shelf life of the resultant glass frit paste. One type of dispersant is a surfactant, such as a polyphosphate, phosphate ester, metal silicate or metal carbonate which may be included in an amount of up to about 2% by weight. The surfactant adsorbs onto adjacent ceramic particles and inhibits coalescence via electronic stabilisation. Another class of dispersant is a water soluble polymeric dispersant such as polyoxyethylene, poly(vinyl alcohol), poly(acrylic acid) or poly(vinylpyrrolidone) which may be included in an amount of up to about 5% by weight.

The vehicle may also contain antifoam agents in an amount of up to about 1% by weight in order to minimise foaming during mixing and/or dispensing, which could potentially lead to bubble formation. Defoamers based on polyoxyethylene or silicones are appropriate additives.

The aqueous binder may additionally contain a biocide in an amount of up to 1% by weight, for example glutaraldehyde, or a thickening agent, for example Viscalex HV30® (Allied Colloids).

The sealing glass paste generally comprises from 65 to 95 percent by weight of the sealing glass frit powder and from 5 to 35 percent by weight of the aqueous vehicle, more preferably from 80 to 95 percent by weight of the sealing glass and from 20 to 5 percent by weight of the aqueous vehicle.

The sealing glass frit powder preferably has a particle size in the range of from 1 to 150*µ*m more preferably 10 to 50*µ*m. The aqueous vehicle of the present invention may be used to formulate sealing glass pastes with any suitable sealing glass, including those which contain PbO. Preferred sealing glasses for use in the present invention typically contain lead oxide, silicon dioxide, boron oxide, zinc oxide and barium oxide. Additional glass forming oxides include zirconium oxide and manganese dioxide.

The aqueous vehicle which is used in the sealing glass pastes of the present invention generally comprises from 0.1 to 15% by weight, preferably from 0.5 to 2% by weight, more preferably from 1.0 to 1.5% by weight, of the hydroxypropylmethyl cellulose, or mixture of hydroxypropylmethyl cellulose with methyl cellulose or hydroxypropyl cellulose dissolved in water. The cellulosic material used in the present invention will generally have a molecular weight in the range of from 500 to 2,000,000, preferably in the range of from 10,000 to 100,000. The aqueous vehicle which is obtained by dissolving the cellulose derivatives in water preferably is a free flowing colourless liquid generally having a viscosity of from 10 to 4000 mPa.s (cPs), preferably from 25 to 500 mPa.s (cPs).

The aqueous binder burns out at a temperature of below 475° to leave less than 2% by weight of residues, preferably less than 1.5% by weight of organic residues, more preferably less than 1% by weight of residues as measured by thermogravimetric analysis.

The sealing glass paste of the present invention is prepared by admixing the aqueous vehicle with the sealing glass frit powder for a sufficient period of time to ensure that a uniform frit paste is obtained.

The sealing glass paste of the present invention may be applied to the surfaces to be joined by any suitable means, for example by dispersion via a gravity feed or pressure feed device. Thus beads or a ribbon of the paste may be applied to one or both of the surfaces to be joined. The surfaces which are to be joined are then formed into an assemblage which is heated to a temperature at which the sealing glass will soften and fuse and at which the cellulose derivative binder will be burnt out. In the assembly of cathode ray tubes, the assemblage is subjected to the heating conditions of the Lehr cycle.

The present invention also includes within its scope an assembly which comprises at least two portions which are joined by a sealing glass paste as detailed above, and, in particular where the assembly is a cathode ray tube.

The aqueous binder system which is used in the present invention possesses the following advantages:
i) the carbonaceous residue levels are very low, less than 2% by weight, after the frit is subjected to the appropriate heating cycle;
ii) contamination from water which is known to give rise to rheological instability in the case of conventional nitrocellulose/ester systems is not an issue with the present invention;
iii) the sealing glass pastes do not contain volatile organic solvents and thus there are no problems with VOC emissions.

The present invention will be further described with reference to the following non-limiting Examples.

In the Examples the following definition is used:

### Lehr Cycle

The Lehr cycle used in the following Examples was as follows: heat from room temperature to 450°C at 10°C/min, hold at 450°C for 45 minutes and then cool to room temperature.

In the Examples the residue content of the various binders used was measured by thermogravimetric analysis (Perkin Elmer TGA7) run in air using a program simulating the Lehr cycle. The following results were obtained.

| | **% residues** |
|---|---|
| Methylcellulose(Benecel M042® Hercules) | <0.1% |
| Methylcellulose(Methocel A4C® Dow Chemical Company) | <0.1% |
| Hydroxypropylcellulose (Klucel G® Hercules) | 0.5% |
| Hydroxypropylmethycellulose (Aldrich) | 1.0% |
| Hydroxypropylmethylcellulose (Methocel E4M® Dow Chemical Company) | 0.4% |

### EXAMPLE 1

Hydroxypropylmethyl cellulose (0.75g) (Aldrich), and hydroxypropyl cellulose (0.5g) (Klucel G® Hercules) were dissolved in deionised water (98.75g). 1.5g of this solution was added to and mixed by hand with 12.5g of a TV sealing glass (Corning glass 7590® frit powder) for a period of six minutes. This frit paste was dispensed onto a glass substrate as a bead and this was fired under the Lehr cycle conditions.

A grey coloured frit was obtained after firing.

### EXAMPLE 2

Hydroxypropylmethyl cellulose (0.75g) (Aldrich), hydroxypropyl cellulose (0.25g)(Klucel G® Hercules) and methylcellulose (0.25g)(Benecel M042® Hercules) were dissolved in deionised water (98.75g). 1.5g of this solution was added to and mixed by hand with 12.5g of a TV sealing glass (Corning glass 7590® frit powder) for a period of six minutes. This frit paste was dispensed onto a glass substrate as a bead and this was fired under the Lehr cycle conditions.

A grey coloured frit was obtained after firing.

### EXAMPLE 3

An aqueous frit vehicle was prepared by dissolving methylcellulose (0.65g) (Methocel A4C® Dow Chemical Company), hydroxypropylmethylcellulose (0.65g) (Methocel E4M® Dow Chemical Company) and glutaraldhyde (0.1g) in water (98.6g). TV sealing glass (Techneglas CV685®, 17.77g) was mixed with the aqueous frit vehicle (2.23g) until the paste was homogeneous. A bead of the paste approximately 2.5cm long and 2cm wide was dispensed onto a square glass panel (7.5cm wide, thickness 2mm). This paste was dried in an oven at 80°C for 10 minutes in order to volatilise the water.

Finally, the dried bead was fired under the Lehr cycle conditions. After cooling, a fused frit bead was obtained which was green/grey in appearance.

### EXAMPLE 4

An aqueous frit vehicle was prepared by dissolving methylcellulose (0.65g) (Methocel A4C® Dow Chemical Company), hydroxypropylmethyl cellulose (0.65g) (Methocel E4M® Dow Chemical Company) and glutaraldehyde (0.1g) in water (98.6g). TV sealing glass (Techneglas CV685®, 17.77g) was mixed with the aqueous frit vehicle (2.23g) until the paste was homogeneous. A bead of the paste was dispensed onto the edge of a square precut piece of TV screen (7.5cm wide, thickness 1.5cm). A second piece of TV screen was then clamped against the paste under slight pressure, thereby forming a composite arrangement. This assembly was dried in an oven at 80°C for 10 minutes in order to volatilise the water.

Finally, the dried assembly was heated under the Lehr cycle conditions. After cooling, the assembly was found to be sealed, with the frit seal being green/grey in appearance.

## Claims

1. A sealing glass paste which comprises at least one sealing glass frit powder and an aqueous binder which comprises an aqueous solution of hydroxypropylmethyl cellulose, or a mixture of hydroxypropylmethyl cellulose with methyl cellulose or hydroxypropyl cellulose, the aqueous binder burning out at a temperature of below 475°C to leave less than 2% by weight of residues based on the total weight of the solids content of the binder.

2. A sealing glass paste as claimed in claim 1 which comprises 65 to 95 percent by weight of the sealing glass frit powder and 5 to 35 percent by weight of the aqueous vehicle.

3. A sealing glass paste as claimed in claim 1 or claim 2 which comprises up to 5% by weight based on the total weight of the composition of a wetting agent.

4. A sealing glass paste as claimed in any one of the preceding claims which comprises up to 1% by weight based on the total weight of the composition of a antifoam agent.

5. A sealing glass paste as claimed in any one of the preceding claims which comprises up to 2% by weight based on the total weight of the composition of a surfactant.

6. A sealing glass paste as claimed in any one of the preceding claims which comprises up to 2% by weight based on the total weight of the composition of a polymeric dispersant.

7. A sealing glass paste as claimed in any one of the preceding claims which comprises up to 1% by weight based on the total weight of the composition of a biocide.

8. A sealing glass paste as claimed in any one of the preceding claims wherein the sealing glass frit powder has a particle size in the range of from 10 to 50*µ*m.

9. A sealing glass paste as claimed in any one of the preceding claims wherein the sealing glass contains PbO.

10. A sealing glass paste as claimed in any one of the preceding claims wherein the aqueous vehicle comprises from 0.5 to 2% by weight of the cellulosic material dissolved in water.

11. An assembly which comprises at least two portions which are joined together by a sealing glass paste as claimed in any one of the preceding claims.

12. An assembly as claimed in claim 11 wherein the portions which are joined together are formed from glass.

13. An assembly as claimed in claim 12 which is a cathode ray tube.

14. A method for joining two surfaces together which comprises applying to at least one surface a sealing glass paste as claimed in any one of claims 1 to 10, forming an assembly of the surfaces to be joined and subjecting the assembly so formed to heating in order to soften and fuse the sealing glass frit in the sealing glass paste.

15. A method as claimed in claim 14 wherein the assembly is heated to a temperature of below about 475°C.

## Patentansprüche

1. Pastöses Glasdichtmittel (sealing glass paste), das wenigstens ein Pulver aus einer Dichtungsglasfritte und einen wässrigen Binder enthält, der eine wässrige Lösung von Hydroxypropylzellulose, oder eine Mischung aus Hydroxypropylmethylzellulose und Methylzellulose oder Hydroxypropylzellulose enthält, wobei der wässrige Binder bei einer Temperatur von unter 475° Celsius abbrennt, um weniger als zwei Gewichtsprozent Reste in Bezug auf das Gesamtgewichts der in dem Binder enthaltenen Feststoffanteile zurückzulassen.

2. Pastöses Glasdichtmittel nach Anspruch 1, mit 65 bis 95 Gewichtsprozent pulverisierter Abdichtungsglasfritte und 5 bis 35 Gewichtsprozent des wässrigen Trägers.

3. Pastöses Glasdichtmittel nach Anspruch 1 oder 2, das bis zu 5 Gewichtsprozent des Gesamtgewichts der Zusammensetzung Netzmittel enthält.

4. Pastöses Glasdichtmittel nach einem der vorhergehenden Ansprüche, das bis zu 1 Gewichtsprozent des Gesamtgewichts der Zusammensetzung Mittel gegen Schaumbildung enthält.

5. Pastöses Glasdichtmittel nach einem der vorhergehenden Ansprüche, das bis zu 2 Gewichtsprozent des Gesamtgewichts der Zusammensetzung oberflächenaktiven Stoff enthält.

6. Pastöses Glasdichtmittel nach einem der vorhergehenden Ansprüche, mit bis zu 2 Gewichtsprozent des Gesamtgewichts der Zusammensetzung polymerischem Dispergierungsmittel.

7. Pastöses Glasdichtmittel nach einem der vorhergehenden Ansprüche, das bis zu 1 Gewichtsprozent vom Gesamtgewicht der Zusammensetzung Biozid enthält.

8. Pastöses Glasdichtmittel nach einem der vorhergehenden Ansprüche, bei dem das Pulver der Dichtungsglasfritte eine Korngröße in dem Bereich von 10 bis 50 *µ*m aufweist.

9. Pastöses Glasdichtmittel nach einem der vorhergehenden Ansprüche, bei dem das Abdichtungsglas PbO enthält.

10. Pastöses Glasdichtmittel nach einem der vorhergehenden Ansprüche, bei dem der wässrige Träger von 0,5 bis 2 Gewichtsprozent des Zellulosematerials in Wasser gelöst enthält.

11. Eine Anordnung mit wenigstens zwei Teilen, die durch ein pastöses Glasdichtmittel miteinander verbunden sind, wie sie in einem der vorhergehenden Ansprüche beansprucht ist.

12. Anordnung nach Anspruch 11, bei der die miteinander verbundenen Teile aus Glas ausgebildet sind.

13. Anordnung nach Anspruch 12, die als Kathodenstrahlröhre ausgebildet ist.

14. Verfahren zum Verbinden zweier Oberflächen miteinander, das das Aufbringen eines pastösen Glasdichtmittels, wie es in einem der Ansprüche 1 bis 10 beansprucht ist, auf wenigstens eine Oberfläche, das Zusammenfügen der miteinander zu verbindenden Oberflächen, und das Erwärmen der so ausgebildeten Anordnung beinhaltet, um die Dichtungsglasfritte in dem pastösen Glasdichtmittel zu erweichen und aufzuschmelzen.

15. Verfahren nach Anspruch 14, bei dem die Anordnung auf eine Temperatur unterhalb etwa 475° Celsius erwärmt wird.

## Revendications

1. Pâte de verre de scellement qui comprend au moins une poudre de fritte de verre de scellement et un liant aqueux qui comprend une solution aqueuse d'hydroxypropylméthylcellulose ou d'un mélange d'hydroxypropylméthylcellulose avec de la méthylcellulose ou de l'hydroxypropylcellulose, le liant aqueux se consumant à une température inférieure à 475°C pour laisser moins de 2 % en poids de résidus par rapport au poids total des constituants solides du liant.

2. Pâte de verre de scellement selon la revendication 1, comprenant 65 à 95 pourcent en poids de poudre de fritte de verre de scellement et 5 à 35 pourcent en poids du véhicule aqueux.

3. Pâte de verre de scellement selon la revendication 1 ou la revendication 2, comprenant jusqu'à 5 % en poids, par rapport au poids total de la composition, d'un agent mouillant.

4. Pâte de verre de scellement selon une quelconque des revendications précédentes, comprenant jusqu'à 1 % en poids, par rapport au poids total de la composition, d'un agent anti-mousse.

5. Pâte de verre de scellement selon une quelconque des revendications précédentes, comprenant jusqu'à 2 % en poids, par rapport au poids total de la composition, d'un tensioactif.

6. Pâte de verre de scellement selon une quelconque des revendications précédentes, comprenant jusqu'à 2 % en poids, par rapport au poids total de la composition, d'un dispersant polymère.

7. Pâte de verre de scellement selon une quelconque des revendications précédentes, comprenant jusqu'à 1 % en poids, par rapport au poids total de la composition, d'un biocide.

8. Pâte de verre de scellement selon une quelconque des revendications précédentes, dans laquelle la poudre de fritte de verre de scellement possède une dimension de particules comprise entre 10 et 50 µm.

9. Pâte de verre de scellement selon une quelconque des revendications précédentes, dans laquelle le verre de scellement contient du PbO.

10. Pâte de verre de scellement selon une quelconque des revendications précédentes, dans laquelle le véhicule aqueux comprend de 0,5 à 2 % en poids de la matière cellulosique dissoute dans l'eau.

11. Assemblage qui comprend au moins deux parties qui sont réunies par une pâte de verre de scellement selon une quelconque des revendications précédentes.

12. Assemblage selon la revendication 11, dans lequel les parties qui sont réunies sont formées de verre.

13. Assemblage selon la revendication 12, qui constitue un tube cathodique.

14. Procédé pour réunir deux surfaces, qui consiste à appliquer sur au moins une surface une pâte de verre de scellement selon l'une quelconque des revendications 1 à 10, former un assemblage des surfaces à réunir et soumettre l'assemblage ainsi formé à un chauffage pour ramollir et faire fondre la fritte de verre de scellement contenue dans la pâte de verre de scellement.

15. Procédé selon la revendication 14, dans lequel l'assemblage est chauffé à une température inférieure à environ 475°C.
